# EUROPEAN PATENT APPLICATION

(11) **EP 4 345 438 A1**
(43) Date of publication of application: **03.04.2024**
(21) Application number: 23199134.0
(22) Date of filing: 22.09.2023
(51) Int. Cl.: G01M 3/40, G01M 3/16

(54) **HIGH VOLTAGE LEAK TESTING METHOD AND DEVICE**

(30) Priority: 30.09.2022 NO 20221047
(71) Applicant: Delta Engineering Bvba, 9500 Ophasselt (BE)
(72) Inventor: de Bruyn, Danny, 9500 Ophasselt (BE)
(74) Representative: Curo AS

(57) **Abstract**

Method and device for leak testing of blow moulded plastic containers (11) by using high voltage in order to check at least one container wall which separates an outside of the container from an inside of the container for micro cracks or pinholes by placing a first electrode (14) on the outside of the container wall and a second electrode (15) on the inside of the container wall. High voltage is then applied between the first and the second electrode, detecting a current between the first and the second electrode and disposing the container if the detected current is above a pre-determined threshold. The first electrode is the anode and the second electrode is the cathode.

## Description

The present invention concerns a method for the leak testing of blow moulded containers as indicated by the preamble of claim 1. According to another aspect, the invention concerns a device as indicated by the preamble of claim 9.

### Background

Leak testing of blow moulded bottles and other containers is essential for providing bottles and containers of high quality. Leak in containers may on the one hand lead to leaching of contained substance. On the other hand, oxygen may penetrate the protective barrier which a blow moulded container represents for foodstuff or beverage. Presence of oxygen leads to loss of quality and frequently to the total loss of food or beverage products. Leak testing before the container is used in packaging applications is therefore an important task in order to avoid significant economic and ecological loss. Different methods for leak testing are known. Widely used are methods wherein an empty container is pressurized for a very short period of time, sealed and the pressure drop observed. The presence of a leak leads to an inacceptable high pressure drop and the container is discarded. EP3809108 B1 discloses a leak tester, which can test several thousand blow moulded bottles right after the blow moulding process. One disadvantage with pressure drop measurements is that the leak needs to be present during the test. Sometimes containers pass a pressure drop leak test, but are unusable for foodstuff or beverage, because the leak is formed during the filling process at a weak position of the container. Weak positions may be detected by application of high voltage through possible weak positions in a container such as micro cracks or pinholes in bottom parts in extrusion blow moulded containers.

JP2006337064 A2 discloses methods for controlling the sealing of the cap of a container. Two electrodes are externally associated to the container applying a high voltage in a sinusoidal regime, verifying the presence of micro-holes from the measurements of the current intensity which passes between the electrodes following the application of such voltage at sinusoidal regime. The drawback is that the use of sinusoidal voltage requires a complex and expensive electronics system and a high energy consumption.

US4243932 A and EP2365309 B1 disclose methods and systems for checking sealed containers with contents enclosed therein for pinholes by placing a sealed container between first and second electrodes impressing voltage across the first electrode and second electrodes to generate and measure discharge current flows. A high energy consumption is required.

A continuous system for high voltage leak detection is shown on https://www.youtube.com/watch?v=aUDcfBYUCHM&ab channel=AntaresVision. The bottles are not in contact with each other.

Another example for a high voltage leak tester for automatic leak testing of micro cracks in the bottom of PET (polyethylene terephthalate) bottles is disclosed on https://delta-engineering.be/high-voltage-leak-tester. Extremely sensitive measurements and easy setup makes testing of several thousands of bottles per hour in line after a blow moulding machine feasible. Due to practical reasons the anode of the high voltage leak detector is place inside the bottle and the cathode on the outside. Micro cracks are detected by measuring the current between anode and cathode through the bottom of the bottle. Typically, 8 kV/0.1 mm are applied.

The drawback of having the cathode on the outside is that the outside of blow moulded plastic containers is negative charged, which leads to attraction between the containers, damaged surfaces and even blocking on the line. These negative effects may be partly overcome by spray coating the surface of the containers with tiny amounts of substances providing a moisture film on the surface. However, these substances are expensive and an increased dosage may be the consequence of the surface charging in the high voltage leak tester.

It is therefore a need for a high voltage leak tester which does not involve surface damage of blow moulded plastic containers and which does not lead to decreased productivity due to blocking of the line.

### Objective

It is thus an objective of the present invention to provide a method and device for high voltage leak testing which does not increase the amount of negative charges on the outside of blow moulded plastic containers.

### The present invention

The above objective is achieved by the method according to the present invention as defined by claim 1.

The device disclosed in claim 9 constitutes a further aspect of the present invention.

Preferred embodiments are disclosed by the dependent claims.

According to the present invention a method for leak testing of blow moulded plastic containers uses high voltage in order to check at least one container wall for micro cracks or pinholes. The container wall separates an outside of the container from an inside of the container. A first electrode is placed on the outside of the container wall and a second electrode on the inside of the container wall. Then a high voltage is applied between the first and the second electrode. If the container wall is free for micro cracks or pin holes, only a negligible current is detected. If micro cracks or pin holes are present in the container wall, a significantly increased current is detected, since the dielectric properties of the container wall are weakened and electrons may propagate through the detecting a cracks or holes in the container wall. A maximum current is pre-determined as a threshold. If the detected current exceeds the threshold, the cracks or holes are not negligible and the container is in danger to leach filled goods or to fail to preserve the filled goods from oxygen. It is essential, that the first electrode is the anode and the second electrode is the cathode in order to avoid negative electric charges on the outside of the container. Such negative charges lead to attraction between the containers, damaged surfaces and even blockings on the line, if the leak testing system is arranged for leak testing of a continuous flow of blow moulded containers.

In one embodiment the container wall has a thickness in the range 0.3 to 3.0 mm, more preferred in the range 0.4 to 2 mm and most preferred 0.5 to 1 mm.

In another embodiment the container wall comprises a thermoplastic material selected from the group consisting of polyethylene terephthalate (PET), high density polyethylene (HDPE), polypropylene (PP). Negative charges leading to attraction between the containers, damaged surfaces and blockings on the line are frequently observed with PET.

In another embodiment the container wall comprises at least one barrier layer selected from the group consisting of gas barrier layer, solvent barrier layer, fragrance barrier layer and any combinations thereof. Barrier layers are usually made of different materials then thermoplastic materials such as PET, HDPE or PP. Materials such as polyamide (PA) or ethylene vinyl alcohol copolymer (EVOH) are frequently used as barrier materials. Good adhesion is essential for providing the expected barrier. Thermoplastic resins grafted with maleic anhydride or acrylic acid may be used at adhesion promotors between the barrier layer and the thermoplastic resin. Failure in the adhesion between different layers in the container wall may facilitate the formation of cracks and holes.

In yet another embodiment the container wall may comprise one or more types of fillers or one or more types of fibres. Fillers and fibres may be used to strengthen the wall of the container or to substitute thermoplastic resin with material of lower cost. Good adhesion between fillers or fibres and the thermoplastic resin serving as matrix is essential in order to avoid cracks and holes.

In another embodiment the negative surface charge on the outside of a checked container may be lower than the negative surface charge on the outside of a non-checked container. This is the case when the anode on the outside of the container wall impairs the formation of negative charges on the outside of the container wall.

In another embodiment the applied voltage is less than 10 kV/0,1 mm, preferably less than 8 kV/0,1 mm and especially preferred less than 5 kV/0,1 mm. Lower voltage can be applied with less costly components and energy may be saved. On the other hand, the sensitivity of the leak tester and thereby the discernment between acceptable and non-acceptable containers may be impaired.

According to the present invention a device may be designed for leak testing of blow moulded containers by using high voltage. The device is designed to check at least one container wall which separates an outside of the container from an inside of the container for micro cracks or pinholes. The device is designed for placing a first electrode on the outside of the container wall and a second electrode on the inside of the container wall followed by applying a high voltage between the first and the second electrode, detecting a current between the first and the second electrode and disposing the container if the detected current is above a pre-determined threshold. The device is designed with the first electrode as the anode and the second electrode as the cathode.

Below, the invention will be descried in further detail in the form of non-limiting exemplary embodiments illustrated by drawings, where:
Figure 1A is a simplified, schematic side view of an arrangement in accordance with the present invention in a first position;
Figure 1B is a simplified, schematic side view of an arrangement in accordance with the present invention in a second position;
Figure 2 is a simplified, schematic side view of an arrangement not in accordance with the present invention in a position similar to Figure 1B;
Figure 3 is an illustration of two measurements according to the present invention, a first one of a product in compliance with the product specification and a second one not in compliance with the product specification.

By schematic is understood that the shape and proportions shown may be significantly different from real-life equipment, though still illustrating the general principle of the invention. By simplified is understood that additional equipment that typically will be present in a real-life plant is omitted for reasons of simplicity.

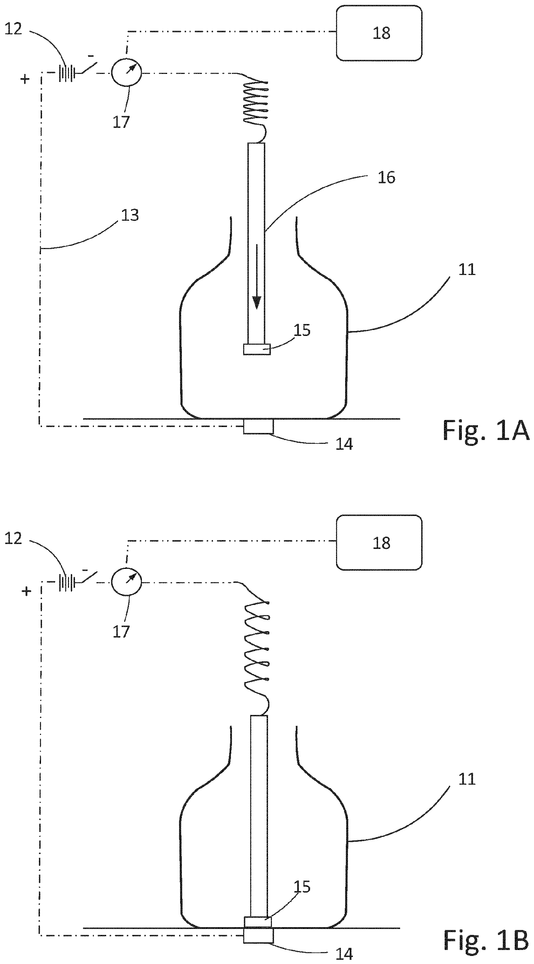

Figure 1A is a simplified schematic side view of a "snap shot" of a testing procedure according to the present invention. A plastic container 11 is about to be tested and the testing equipment comprises a direct current supply 12, electric conductors 13, a first electrode 14 arranged outside the container, and a second electrode 15 arranged on a movable rod 16, configured to enter the container opening and to bring the second electrode adjacent to the first electrode. A measurement device 17 is connected in the electric circuit to measure the relation between voltage and current and a computer device 18 receives signals from the measurement device 17 in order to determine compliance or non-compliance with product specification for the container in question. The "snap shot" of Figure 1A is when the rod 16 is bringing the second electrode 15 downwards into the container, immediately before a measurement is taking place.

The first electrode 14 is the anode connected to the positive side of the direct current source 12 while the second electrode 15 is the cathode connected to the negative side of the direct current source.

Figure 1B shows the same arrangement as Figure 1A in the measuring position, i.e. when the second electrode 15 is brought down to the bottom of the container adjacent to the first electrode 14. Measurement can be performed very rapidly once this position is reached, typically within fractions of a second.

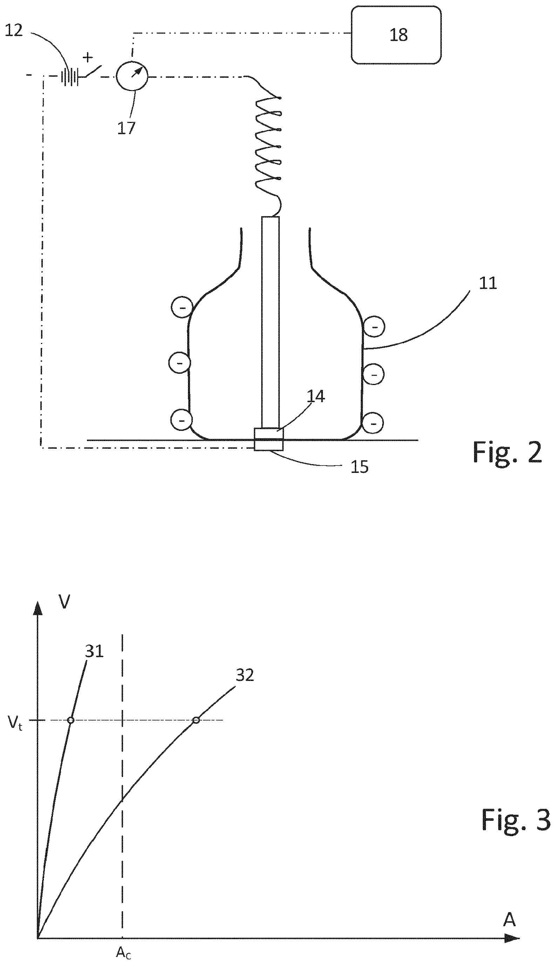

Figure 2 shows the same arrangement as Figure 1B with the major exception that the poles of the battery has been switched, implying that the electrode outside the container is connected to the negative side of the battery, thereby constituting the cathode in the circuit while the electrode inside the container is now the anode. This configuration is not in accordance with the present invention and leads to build-up of negative charges on the outside wall of the container and the disadvantages inherent thereby.

Figure 3 shows the correlation between voltage (V) and current (A) for two measurements, representing measurement performed on two different containers. The first line 31 shows a high voltage applied with a very modest current related thereto. The entire line is to the left of the dotted line marked A_{C}, defining the current limitation for products in compliance with the product requirement. The second line 32, however, shows that the voltage applied generated a substantial current that exceeded the compliance limit indicated by the dotted line. The product represented by the second line therefore had to be destroyed/ recycled. It should be noted, however, that it is not a requirement of the present invention to establish such complete lines from low to high voltage in order to test the products. It is sufficient to test at a specific voltage, such as indicted by the voltage level Vₜ in Figure 3.

It should be noted that the drawings only present the principles of the present invention and that the scale of the drawings may deviate significantly from real-life embodiments.

## Claims

1. Method for leak testing of blow moulded plastic containers (11) by using high voltage in order to check at least one container wall which separates an outside of the container from an inside of the container for micro cracks or pinholes by placing a first electrode (14) on the outside of the container wall and a second electrode (15) on the inside of the container wall, applying high voltage between the first (14) and the second electrode (15), detecting a current between the first and the second electrode and determining whether the detected current is above a pre-determined threshold (A_{C}), **characterized in that** the first electrode (14) is the anode and the second electrode (15) is the cathode.

2. Method as claimed in claim 1, wherein the container (11) wall has a thickness in the range 0.3 to 3.0 mm, more preferred in the range 0.4 to 2 mm and most preferred 0.5 to 1 mm.

3. Method as claimed in claim 1 or 2, wherein the container (11) wall comprises a thermoplastic material selected from the group consisting of polyethylene terephthalate (PET), high density polyethylene (HDPE), polypropylene (PP).

4. Method as claimed in any one of the preceding claims, wherein the container (11) wall comprises at least one barrier layer selected from the group consisting of gas barrier layer, solvent barrier layer, fragrance barrier layer and any combinations thereof.

5. Method as claimed in any one of the preceding claims, wherein the container (11) wall comprises one or more types of fillers.

6. Method as claimed in any one of the preceding claims, wherein the container (11) wall comprises one or more types of fibres.

7. Method as claimed in any one of the preceding claims, wherein the negative surface charge on the outside of a checked container is lower than the negative surface charge on the outside of a non-checked container.

8. Method as claimed in any one of the preceding claims, wherein the applied voltage is less than 10 kV/0,1 mm, preferably less than 8 kV/0,1 mm and especially preferred less than 5 kV/0,1 mm.

9. Device designed for leak testing of blow moulded containers (11) by using high voltage in order to check at least one container (11) wall which separates an outside of the container from an inside of the container for micro cracks or pinholes, said system is designed for placing a first electrode (14) on the outside of the container wall and a second electrode (15) on the inside of the container (11) wall, applying high voltage between the first and the second electrode, detecting a current between the first (14) and the second electrode (15) and determining whether the detected current is above a pre-determined threshold (A_{C}), **characterized in that** the first electrode (14) is the anode and the second electrode (15) is the cathode.

10. Device according to claim 9, wherein the device is arranged for leak testing a continuous flow of blow moulded containers (11).
